# EUROPEAN PATENT SPECIFICATION

(11) **EP 3 778 350 B1**
(45) Date of publication and mention of the grant of the patent: **11.09.2024**
(21) Application number: 19191318.5
(22) Date of filing: 12.08.2019
(51) Int. Cl.: B62B 5/00

(54) **TRANSPORT SYSTEM WITH TWO TRANSPORT PLATFORMS AND A CONNECTOR ELEMENT**
TRANSPORTSYSTEM MIT ZWEI TRANSPORTPLATTFORMEN UND EINEM VERBINDUNGSELEMENT
SYSTÈME DE TRANSPORT AVEC DEUX PLATEFORMES DE TRANSPORT ET UN ÉLÉMENT DE CONNECTEUR

(43) Date of publication of application: 17.02.2021
(73) Proprietor: Schoeller Allibert GmbH, 19057 Schwerin (DE); CHEP TECHNOLOGY PTY LTD., Sydney, NSW 2000 (AU)
(72) Inventor: VINKE, Jan, 19057 Schwerin (DE); CANT, Malcolm, Sydney NSW 2000 (AU); LOPEZ URAN, Daniel, Sydney NSW 2000 (AU)
(74) Representative: Winter, Brandl - Partnerschaft mbB

(56) References cited:
- DE-U1- 9 100 871
- JP-A- 2008 155 921
- JP-A- H09 156 642
- JP-B2- 5 850 622

## Description

The present application relates to a transport system comprising at least two transport platforms and a connector element being connected or connectable to flat decks of the at least two laterally arranged transport platforms, more particularly to a dolly or a pallet, in order to provide a stiff connection of the at least two transport platforms, the connector element comprising at least two legs which are inserted or insertable into corresponding openings of each of the at least two transport platforms.

### Background of the invention

Pallets, dollies or transport rollers are well-known logistic components for transporting goods of nearly all sizes, shapes, loads and environments. Therefore, there are a multitude of different dollies and pallets that are adapted for specific purposes, shaped for receiving specific containers and goods or having a simple flat surface. In particular, dollies and pallets are often provided for boxes, plastic crates or trays having top side stacking rims as well as corresponding stacking structures on their lower surfaces to enable secure stacking of several identically shaped boxes on top of one another. Furthermore, dollies and pallets are usually produced as well as relocated or transported in large numbers. Therefore, they must be easy to transport and manufacturing must be of low cost and enable simple and fast assembly.

### Prior art

From CA 2 232 479 C, transport platforms with wheels are known which have hooks at one side and openings at the other side for receiving corresponding hooks of a second platform or of an intermediate element that can be inserted from above, wherein an upper surface of the intermediate element is even with a deck of the platforms. It is disadvantageous that during coupling, a user has to pay attention to an orientation of the transport platforms relative to one another and a coupling time will increase. Furthermore, coupling of the platforms without the intermediate part is not or not easily possible if goods are loaded thereon. The intermediate element allows an adaptation of the platform size comprising intermediate platform sizes, due to which the intermediate element is large, relatively heavy and difficult to handle. Also, the platforms can be coupled only in one direction. Since the intermediate element is simply inserted into the openings, a coupling of the respective components is not secure, such that the system is not appropriate only for very short transport distances. Also, goods that are loaded on the platform may shift easily and even fall down, e.g. when an obstacle is hit.

Further, JP 5 850 622 B2 discloses an intermediate element comprising a fence like holder e.g. for holding boards upright. The intermediate element has L-shaped sheet metal corners which can be inserted from above into an equally thin gap in a frame of two carriages that are spaced apart from one another, which may be difficult. Similar to the above, the intermediate element is large, relatively heavy and difficult to handle. The intermediate piece may connect carriages at different orientations, since the gap is laterally open and thus, can receive the sheet metal rim even if it laterally protrudes from the gap. However, this will not allow a matrix-like arrangement of platforms and the connection is not secure. Also, while the fence is provided, it does not necessarily prevent shifting of loads during transport. Finally, the structure of this system is complicated and manufacturing is expensive.

JP 2008 155921 A discloses a pallet equipped with jigs which have one or more legs for insertion into the pallet and an upward protruding piece for fixing articles placed on the pallet between several jigs. Several different jigs are provided as a set for adapting the pallet for the transport of differently sized articles, with one jig having two downwards extending legs and one upward protruding piece arranged at an off-centre position between said legs.

From JP H09 156642 A, a fixing system for car seats is known, including a base and jigs, which are bolted to the base and provide a structure adapted to hold the car seats.

Moreover, DE 91 00 871 U1 discloses a system including dollies adapted for the transport of boxes. The dolly has holes at a periphery of its deck for receiving free ends of u-shaped wire brackets, wherein a first free end has a stopper element preventing its removal from the deck. The second free end is shorter, such that the bracket can be pulled upwards until the second free end is removed from the deck, and can then be rotated around the axis formed by the first leg. A second dolly can be arranged next to the dolly such that the second leg of the rotated bracket can be inserted into a corresponding hole in a deck of the second dolly, thus connecting the dollies.

### Summary of the invention

In view of the above described problems it is an object of the present invention to provide a transport system having at least two transport platforms, such as a dolly, pallet or transport tablet, which overcomes the disadvantages of the prior art. In particular, it is an object of the invention to provide a connector element and a transport system which allows quick, simple and variably adaptation of transport platforms which can also support loads securely. Further, the transport platform should be sturdy, easily assembled and produced cost-effectively.

The object is achieved by a transport system having the features of claim 1. Advantageous aspects of the present invention are subject of subclaims.

In detail, the object is achieved by a transport system having at least two transport platforms, each of which has a deck and at least one opening, and a connector element being connected or connectable to the decks of the at least two laterally arranged transport platforms in order to provide a stiff connection of the at least two transport platforms. The connector element has a plate shaped base portion which is adapted to lie flush against the decks when the connector element is connected to the decks. The connector element comprises a rim portion protruding from the plate shaped base portion on one side thereof in order to protrude from the decks of the transport platforms for restraining loads placed on top of the decks at least in a lateral direction when the connector element is connected to the decks, and at least two legs which protrude from another side of the plate-shaped base portion in order to be inserted or insertable into the corresponding openings of each of the at least two transport platforms when the connector element is connected to the decks. Further, the at least two legs comprise engagement portions, preferably tabs or protrusions, adapted for being received and snap-fitted into the openings when the connector element is connected to the decks. This allows for a secure and easily assembleable connection as well as lateral support for goods loaded on the respective decks. Additionally, the at least two legs comprise at least one primary leg and/or at least one secondary leg provided at each side of the rim portion and are arranged symmetrically with respect to a vertical symmetry plane comprising an extension axis of the rim portion being located in and extending along said symmetry plane.

In other words, at least one opening is formed or provided in the top face or deck of the transport platform so that a connector element can be snapped into such opening in the deck from above, thereby allowing a very quick and easy assembling (one step assembly) of the connector element to the transport platforms. Since the connector element can be attached to the platforms from above, the platform has to be accessible only from above during assembly. Preferably, the connector element is narrow, in particular shorter than a length of any side of the platform. Therefore, when two platforms are connected, it does not extend laterally over the platforms, thereby avoiding damage of the connector element by obstacles, other transport platforms or vehicles, such as fork lifts, hitting against the dolly.

Accordingly, the connector element as a whole and particularly the rim portion is more robust and the legs and the rim portion may be arranged more flexibly, that is, their positions may be optimized. Moreover, a load transported on the deck may be seated on top of the base portion. In this manner, the weight of the load presses down onto the base portion and a torque resulting from a load pressing against the rim portion which may act as a lever may be counteracted by the weight of the load itself. Further, the weight of the load may result in a larger friction resistance between the deck and the base portion of the connector element. In order to maximize this effect, additional layers having large friction coefficients may be provided between the deck and the respective base portions, or alternatively, a lower surface of the base portions may be coated with such a material. In addition, the weight of the load pressing down on connector element may help to urge the legs of the connector element into their respective opening. Furthermore, the weight of the load pressing down on connector element may help to oppose removal of the legs of the connector element from their respective opening - which is undesirable whilst the transport platforms and connector element are in use.

If the engagement structure of any leg is formed by one or more protrusions, these protrusions extend from the respective leg in the lateral direction. Preferably, the protrusions are substantially triangular blocks having a horizontal upper surface adapted to lie flush against a corresponding engagement structure of the deck as well as a lower surface which is tapered to form a slope or ramp enabling the leg to glide into the corresponding opening in the deck more easily. Tabs as an engagement portion of the legs have the additional advantage that force may be introduced via an inner circumference of a through hole or opening in the leg, i.e. parallel to the leg. Therefore, the leg is not bent due to off-centre force introduction which is both advantageous regarding the stability of the leg and the security of the connection between the connector element and the transport platform.

Although protrusions and/or tabs and/or lugs are preferred as engagement portions, since these are cost-effective and simple, other engagement portions may be provided, such as spring loaded latches or the like. Also, the connector element can be detached from the deck of the transport platform and may then be reused otherwise.

Preferably, the engagement portions of the dolly or pallet, into which the engagement portions of the one or more legs are snap-fitted or snap-fittable, are, in a first case, located within the opening or openings of the deck or, in a second case, at a lower side of the dolly or pallet directly adjacent to the opening or openings. In the first case the snap-fit connection is effectively protected against hits or getting caught on an obstacle. Thus damage of the connection or even undesired disengagement are prevented. In the second case, manufacturing is more cost-effective, since any elements that need machine-finishing are easily accessible, and also, if desired, the connector elements may be detached easily.

The transport platform may be formed as a (wheeled) dolly or as a pallet. The invention is not limited to any particular size of the dolly or pallet.

It is preferred that the rim portion is arranged at a centre of the connector element so as to coincide with an upper edge of the deck when the connector element is connected thereto. In particular, the rim portion may extend centrally over the whole adapter element so was to bisect the base portion. This allows maximum utilization of the available space on each of the decks while the rim portion has a large supporting surface. That is, a relation between loading space of each deck and lateral support may be optimized.

Further preferably, at least two primary legs (primary set of legs) and at least two secondary legs (secondary set of legs) are preferably arranged symmetrically to the rim portion. That is, the connector element is mirrored with respect to a vertical plane including an extension axis of the rim portion. Additionally, the connector element may be mirrored with respect to a vertical plane which is orthogonal to the rim portion.

The legs may have several different shapes and, in particular, may be shaped differently from one another. For example, one or more legs, preferably the secondary legs, may be thick and sturdy, providing a snug or narrow fit with the respective opening for bracing against an inner surface thereof, while at least one other leg, preferably the primary leg or legs, may be narrow and flexible (e.g. tab-shaped). The legs may have different functions. For example, the thick, sturdy legs may provide stability with regard to torque loads and/or the narrow, flexible and therefore easily elastically bendable legs may provide a particularly large engagement portion to receive any tensile loads acting on the connector element. For this purpose, it is further advantageous, if both kinds of legs are provided and if the narrow, flexible legs are longer than the thick, sturdy legs. This is the case, since during the coupling of the transport platforms via the connector element, the narrow, flexible legs are inserted first and may have time and space to be deformed elastically until the thick, sturdy legs enter their corresponding openings. The narrow, flexible legs and/or the corresponding engagement portions may be formed in such a manner that an elastic force resulting from the elastically bent leg presses the transport platforms apart or together during insertion.

Additionally, the legs as well as their respective engagement portions may face in different directions in order to optimally absorb forces acting in different directions and to minimize a danger of accidental dislodging.

Optionally, the at least two primary legs may be arranged at a centre of the connector element, preferably directly adjacent to or overlapping the rim portion. This is particularly advantageous since a force introduced via the rim portion can be transferred straight to the dolly and stress concentration is minimized. In particular this relates to the case where the primary legs are long, narrow and flexible as described above.

On the other hand, the at least two secondary legs are preferably arranged at opposite sides on an outer periphery of the connector element. This way, particularly if the engagement portions of the secondary legs are protrusions which protrude laterally from the leg in opposing directions (i.e. away from each other or from the rim portion arranged therebetween), a maximum lever may be provided for receiving and transmitting torque due to a load pressing laterally against the rim portion. That is, the secondary leg can provide an anchor which acts against the torque via a lever resulting from the distance between the secondary leg and the rim portion. Correspondingly, a secondary opening or openings in the decks for receiving the secondary legs are located at a distance from an upper edge of the deck. That is, the engagement portion one of the legs is preferably different from the engagement portion of another one of the legs, the engagement portions preferably being engageable and disengageable from opposite directions which further improves stability of the connection.

Moreover, the at least two secondary legs may have an elongated shape extending parallel to the rim portion. Accordingly, at least two of the legs extend parallel to the rim portion and to each other. That is, an area between two such legs is rectangular, thus generating a rigid arrangement that may advantageously counteract any forces or torques applied to the connector element. In particular, lateral forces acting on the rim portion and torques resulting therefrom can be held easily.

Further preferably, the legs on each side of the rim portion form at least three engagement portions which are spaced apart from each other both laterally and vertically. For example, the above described laterally elongated and vertically short secondary leg may have two engagement portions arranged thereon, and the above described vertically long but laterally narrow primary leg may have a through hole serving as an engagement portion. In this case, these three engagement portions form a triangle which lies in a plane that is inclined with respect to the base portion of the connector element. Accordingly, loads acting on the connector element at any angle can be received and transmitted advantageously.

According to another advantageous aspect of the present invention, the rim portion forms a section of a restraining rim or of a stacking rim, preferably a longitudinal side rim section. In particular, the stacking rim corresponds to stacking boxes or a section of a restraining rim providing lateral support in general for goods loaded onto the deck. The rim portion may alternatively form a rectangular, T-shaped or X-shaped corner rim or, at least partially, three sides of a rectangle. In this manner, each deck may be additionally partitioned and/or four transport platforms may be connected at corners of their decks via connector elements which accordingly have at least four legs.

Preferably, as mentioned above with respect to the connector element, the opening or openings in the decks are located such that, when the connector element connects the at least two transport platforms, the rim portion of the connector element coincides with both of the upper edges of the decks. In particular, at least one primary and secondary opening for receiving at least one of the primary and at least one of the secondary legs, respectively, are provided which symmetrically extend parallel to the upper edge.

According to a particularly advantageous aspect of the present invention, at least four openings, particularly four sets of openings, are provided in the rectangular deck of each transport platform, at least one per side and/or corner, such that the transport platforms are connected or connectable to each other at any of their respective sides or flanks. Also, the connector elements are short with respect to the direction in which the rim portion extends, more precisely shorter than any side or flank of the corresponding transport platforms. Therefore, any appropriate number of transport platforms may be connected in a line or matrix configuration or any other appropriate shape.

The transport system may further comprise at least one adapter element which is connected or connectable to one of the decks via the opening or openings, comprising an additional rim portion which corresponds to the rim portion of the connector element. Basically, the adapter element may take the form of a connector element cut in half along its rim portion. The adapter elements may be connected to a section of a periphery of the deck which does not adjoin another transport platform, in order to provide lateral support at those sides or in those directions where no connector element is provided. The deck itself may have a rim which is interrupted at the opening or openings in the deck so as to provide a continuous rim when connector elements and/or adapter elements are inserted into said openings.

According to another aspect, the decks may have wheel recesses which are adapted to accommodate wheels of another dolly or pallet stackable onto the dolly or pallet and which are preferably formed as hollow cylinder sections. In addition, each connector element is formed in such a manner, and the opening or openings for receiving the one or more legs are located in such a manner that the wheel recesses are not covered by the respective connector element when it is connected to the deck.

Further preferably, a lower side of the dolly or pallet may have a stacking structure corresponding to the rim portion forming part of a stacking rim, which may be provided by the connector elements and/or the adapter elements. Thereby, dollies having wheels and/or dollies without wheels and/or pallets may be stacked on top of one another for space-efficient storing of the dollies and/or pallets, irrespective of whether the at least one connector element is connected thereto or not.

The dolly or pallet body and/or the connector element each may be integrally formed (one piece) and may be is made of plastic, in particular thermoplastic, e.g. by injection moulding.

### Description of the figures

The following figures illustrate an exemplary embodiment of the invention. The invention is not limited to the embodiments described below. Other embodiments, combinations of embodiments and modifications may be provided within the scope of protection defined by the claims.
Fig. 1A, Fig. 1B and Fig. 1C show perspective views of several configurations of transport platforms which are connected to each other via a connector element according to a first embodiment.
Fig. 2 shows a perspective bottom view of the connector element according to the first embodiment.
Fig. 3 shows a perspective top view of the connector element according to the first embodiment.
Fig. 4 shows a partial sectional view of two transport platforms connected via the connector element according to the first embodiment.

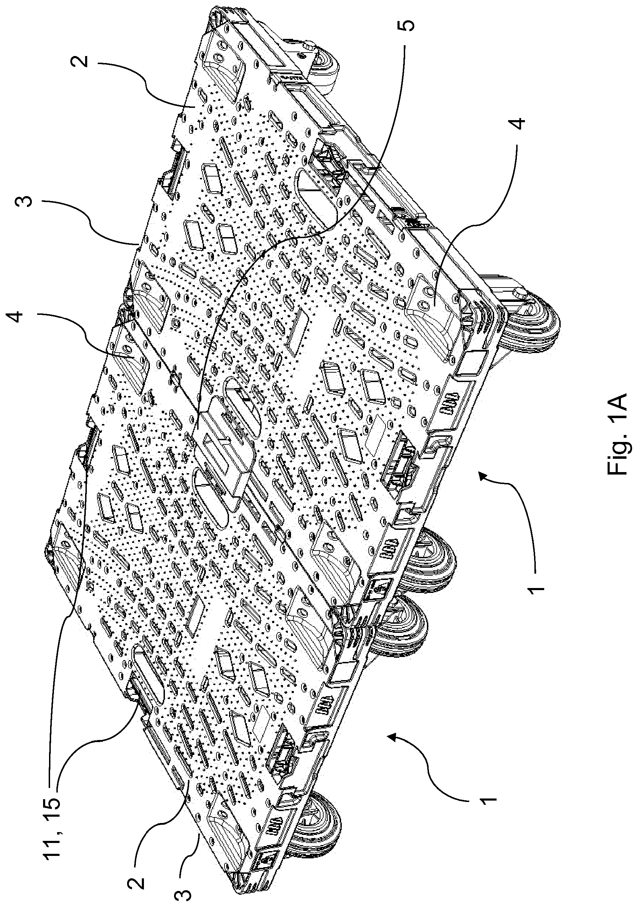

Fig. 1A shows two dolly bodies 1 which each are part of a wheeled transport platform or dolly. Each dolly body 1 has a substantially rectangular form and has a deck 2 or topside on which loads can be stored and transported. The dolly bodies 1 may be provided with wheels attached to their bottoms, for example as disclosed in WO 2017/130167 A1.

The deck 2 is substantially flat. An upper edge 3 of the dolly body 1 surrounds the deck 2 and is level and flush with the deck 2, i.e. it does not protrude from the deck 2. At corner portions of the deck 2, wheel recesses 4 having a sectional cylindrical shape are formed which are adapted to receive wheels of a second dolly which can be stacked onto the dolly body 1. Further, in the deck 2 of the dolly body 1, a plurality of holes and recesses are provided extending into the dolly body 1 which e.g. provide hand holds or mounts, reduce the overall weight of the dolly body 1, remove liquids from the deck 2 of the dolly body 1 and/or are provided in order to avoid accumulations of material which are disadvantageous in moulding.

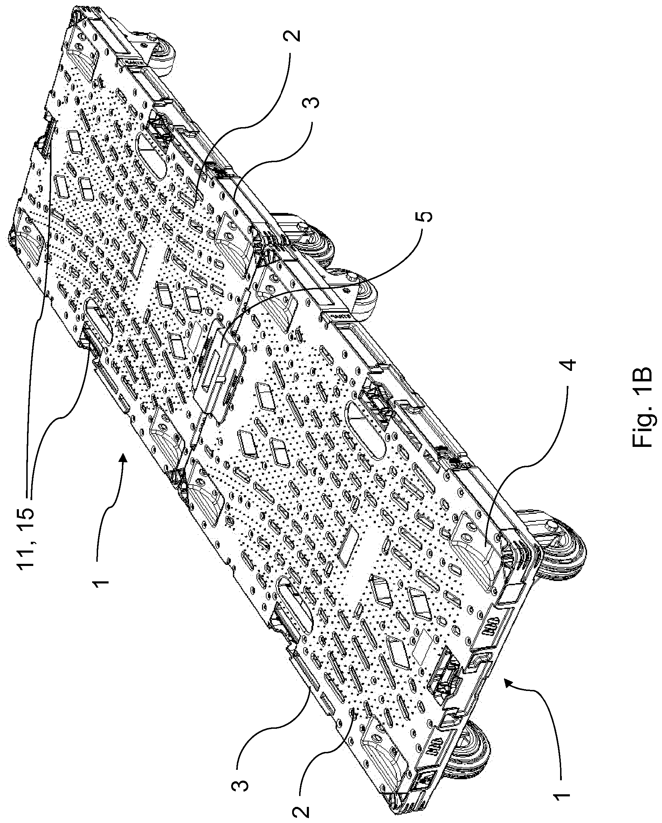

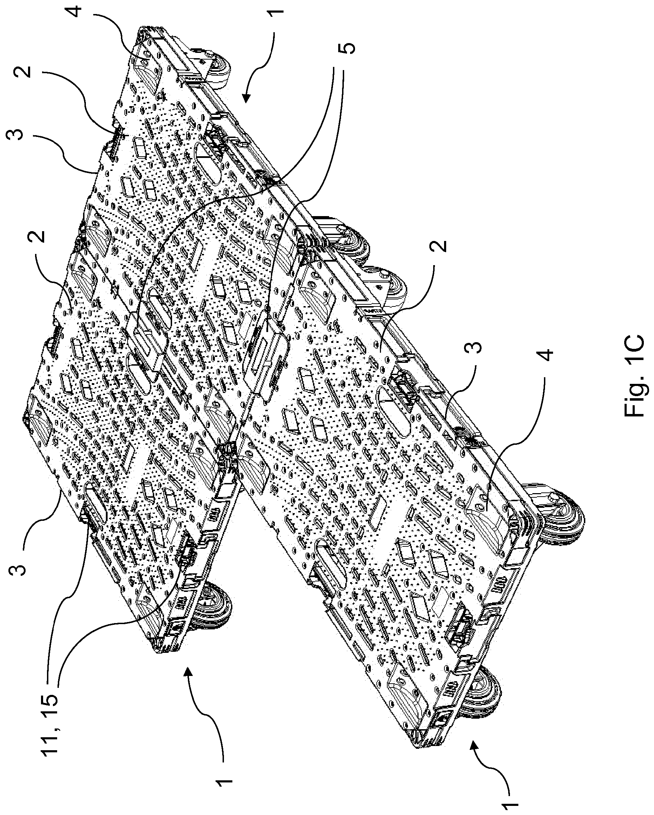

The two dolly bodies 1 are aligned with each other and juxtaposed such that they contact each other at their longitudinal flanks. One connector element 5 is connected to the decks 2 of both of the dolly bodies 1 such that they are coupled to one another. However, according to the present invention, there may be several positions along the edges 3 of the decks 2 at which the connector element 5 may inserted so as to couple the dolly bodies 1. For example, Fig. 1B shows a configuration in which two dolly bodies contact each other and are coupled at their short flanks or front and, respective end faces. Fig. 1C shows a further configuration in which three dolly bodies 1 are assembled in an L-shape, i.e., as a combination of Figs. 1A and 1B. This illustrates that in theory, there is no limit regarding the relative arrangement or the number of dolly bodies 1 which may be coupled via connector elements 5.

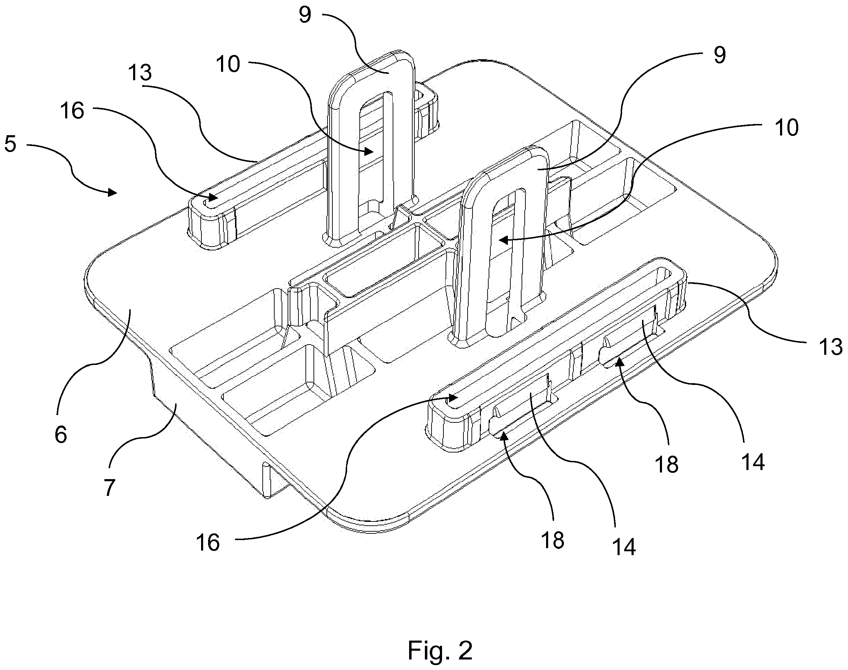

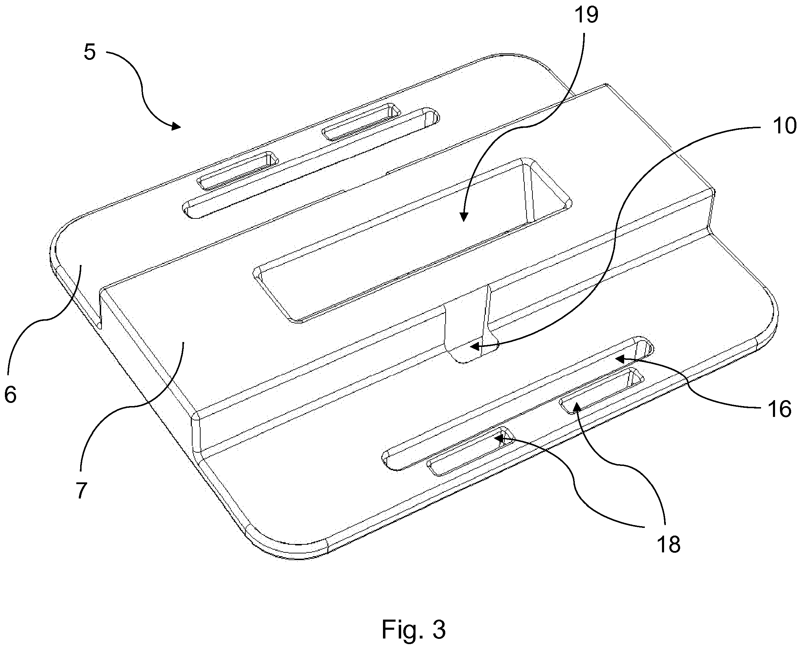

Each connector element 5, shown in more detail in Figs. 2 and 3, comprises a substantially plate-shaped base portion 6 and a rim portion 7 protruding vertically from an upper surface of the base portion 6. A lower surface of the base portion 6 rests directly on the decks 2 of the juxtaposed dolly bodies 1. The rim portion 7 is arranged centrally on the base portion 6 and extends from one side thereof to the other side. That is, the rim portion 7 bisects an upper surface of the base portion 6. When the connector element 5 is connected to the dolly bodies 1, the rim portion 7 is arranged so as to extend along the upper edges 3 of the decks 2. The rim portion 7 is adapted to provide lateral support for loads placed on top of the respective decks 2 so as to keep loads placed on one dolly body 1 from sliding towards the other dolly body 1. Furthermore, the rim portion 7 of the connector element 5 may serve as a partial stacking rim for stacking complementary stacking boxes onto the deck 2. Additional stacking rim portions may be formed via adapter elements which may be connected to the deck 2 near the upper edge 3 thereof and which substantially correspond to half a connector element 5, bisected along the rim portion 7. Thus, the dolly body 1 and/or the connector element 5 and, optionally, one or more adapter elements, may be part of a stacking system, wherein the stacking rim provides a form closure with lower stacking structures of corresponding stacking boxes. The rim portion 7 may also serve as simple restraining rim portion for supporting and restraining goods loaded onto the deck 2 in a lateral direction.

Fig. 2 shows a bottom view of the connector element 5 according to the first embodiment of the invention. The structure of the connector element 5 is symmetrical with respect to planes which are orthogonal to the base portion and to each other and is described in detail below. At a centre of the base portion 6, the rim portion 7 is provided which is substantially hollow and, viewed from the bottom, forms several recesses separated by ribs, such that the rim portion 7 is substantially hollow. Thereby, material accumulations are avoided while the ribs provide stability and stiffness of the rim portion 7.

At a centre of the connector element 5, two primary legs 9 are arranged on the lower surface of the base portion 6 and extend orthogonally thereto. More precisely, the primary legs 9 are arranged on the lower surface of the base portion 6 facing each other at positions directly adjacent to the rim portion 7. Each primary leg 9 is formed as a tab or tongue having a through hole 10 which serves as an engagement portion of the respective primary leg 9. The through holes 10 are aligned with each other and extend laterally through the primary legs 9 as well as vertically through the base portion 6. Each tab or primary leg 9 is adapted to be inserted into a primary opening 11 in the deck 2 of one of the dolly bodies 1 and to be snap-fitted into corresponding engagement portions 12 located within the primary opening 11.

At two opposing sides of the base portion 6, next to the primary legs 9, secondary legs 13 project from the base portion 6 orthogonally thereto. Further, each secondary leg 13 extends longitudinally in a direction parallel to the rim portion 7, thus providing a large surface for arranging an engagement portion 14 thereon and for bracing against an inner surface of a corresponding secondary opening 15 provided in the deck 2 of each of the dolly bodies 1 when the respective secondary leg 13 is inserted therein. The secondary opening 15 and the primary opening 11 of each of the dolly bodies 1 form a set of openings configured to receive one set of legs, i.e., one of the secondary legs 13 and one of the primary legs 9 of the connector element 5, respectively. Several of such sets of openings 11, 15 are provided near the edge 3 of each dolly body 1, such that at each side of the dolly body 1 at least one set of openings is provided in order to enable the configurations shown in Figs. 1A to 1C.

Each secondary leg 13 is shaped as a thick substantially rectangular body which is hollow due to a longitudinal opening 16 extending laterally within the rectangular body and vertically through the rectangular body and the base portion 6. Additionally, compared to the primary legs 9, the secondary legs 13 are very short, i.e. have a small vertical extension. Therefore, the secondary legs 13 are stiff and robust. Each secondary leg 13 has two protrusions 14 forming the corresponding engagement portion, particularly arranged on an outer flank such that the protrusions of the two secondary legs 13 face away from each other. The protrusions 14 are adapted to be snap-fitted into corresponding engagement portions 17 of the secondary openings 15. Since the protrusions 14 provide a long engagement portion or more accurately, several engagement portions distributed along each secondary leg 13, it is very robust, even if an eccentric force would act on the connector element 5, e.g. due to a hit to one corner of the rim portion 7. Additional demounting through holes 18 are provided in the base portion 6 directly adjacent to the secondary legs 13 at positions which correspond to positions of the protrusions 14 of the secondary legs 13. These demounting holes 18 can be used for accessing the protrusions 14 from above when the connecting element 5 is connected to one of the decks 2 in order to disengage the protrusions 14 from the corresponding engagement portions 17 of the secondary openings 15 in the dolly body 1.

Fig. 3 shows a top view of the connector element 5 according to the first embodiment of the invention. Therein, the rim portion 7 bisects the upper surface of the base portion 6 and extends vertically thereto. The through hole 10 of the primary leg 9 opens in the upper surface of the base portion 6 directly adjacent to the rim portion 7. Furthermore, the longitudinal opening 16 of the secondary leg 13 as well as the demounting holes 18 also open in the upper surface of the base portion 6 at an outer periphery thereof.

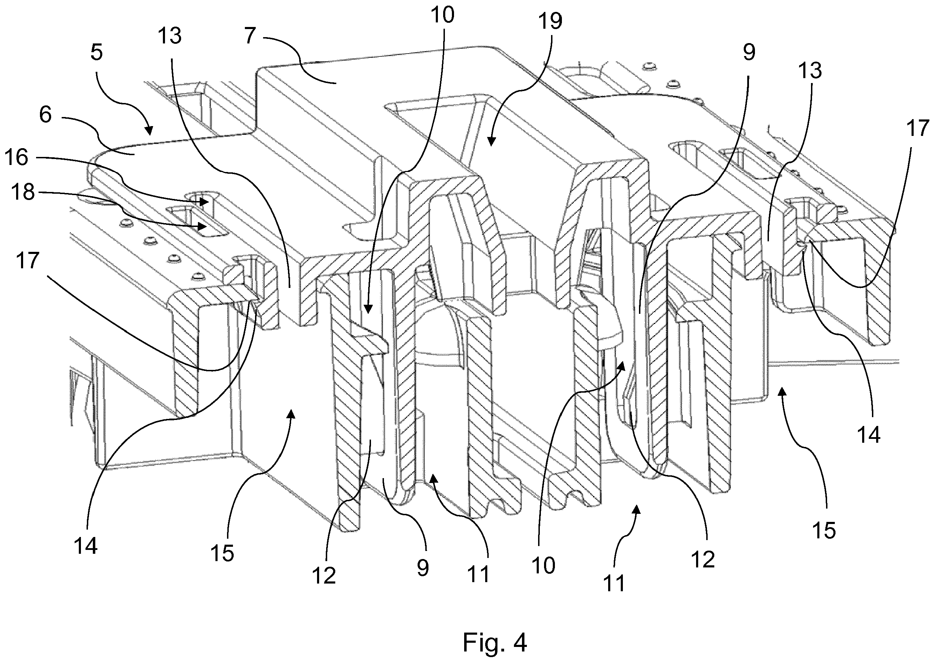

Fig. 4 shows a partial sectional view of the two dolly bodies 1 which are arranged side by side, contacting each other, and of the connector element 5 which is inserted and snap-fitted into the decks 2 of the dolly bodies 1. Thus the coupling of two dolly bodies 1 via the connector element 5 is illustrated. In order to connect the two dolly bodies 1, the primary leg 9 and the secondary leg 13 on one side of the connector element 5, i.e. on one side of the rim portion 7, are respectively fitted into the primary opening 11 and the secondary opening 15 in the deck 2 of one of the dolly bodies 1. Simultaneously, the primary leg 9 and the secondary leg 13 on other side of the connector element 5, i.e. on the other side of the rim portion 7, are respectively fitted into the primary opening 11 and the secondary opening 15 in the deck 2 of the other one of the dolly bodies 1.

The secondary legs 13 are thick and sturdy and therefore stiff, so that the protrusions 14 serving as an engagement portion are very small. The protrusions 14 protrude from the secondary leg 13 only slightly, towards the centre of the dolly, so that they can snap into the corresponding engagement portion 17 provided in the secondary opening 15. This corresponding engagement portion is an edge 17 provided in the secondary opening 15 which the protrusions 14 catch onto, i.e. with which the protrusions 14 come in undercutting engagement. The edge 17 is a sharp edge that the small protrusions 14 can hold securely without slipping. For the same reason, the protrusions 14 have sharp edges as well.

During insertion of the legs of the connector element 5 into the decks 2, the through holes 10 of the primary legs 9 which serve as engagement portions of the connector element 5 snap over the corresponding engagement portions 12 of the corresponding dolly bodies 1, forming another undercutting engagement. Each of these corresponding engagement portions is a nose 12 protruding from an inner surface of the primary opening 11 in an outwards direction, away from the centre of the dolly. The surface of the nose 12 which faces the deck 2 of the dolly body 1 forms a ramp for guiding the primary leg 9 during insertion.

Compared to the secondary legs 13, the primary legs 9 are slim and long such that their vertical length is about three to four times as long as that of the secondary legs 13, extending almost through the whole dolly bodies 1. Thus, the primary legs 9 can be elastically deformed. Thereby, when connecting the connector element to the decks 2, the primary legs 9 contact the ramps formed by the noses 12, are consequently pressed to the side and deform elastically until a lower end of each nose 12 reaches the corresponding through hole 10 of the primary legs 9. Then, the primary legs 9 snap over the noses 12, the noses 12 being inserted into the through holes 10 of the primary legs 9. Due to the large elastic deformation of the primary legs 9, the area forming the corresponding undercutting engagements is wide and thus, the engagements are unlikely to slip. The lower surfaces of the noses 12 and the through holes 10 provide defined contact surfaces and edges.

When the connector element 5 is being connected to the deck 2, the longer primary legs 9 are inserted first and pressed to the side and then, later, the secondary legs 13 are inserted. Therefore, the force needed to press the connector element 5 into the openings 11, 15 in the decks 2 gradually increases during insertion. Also, by first inserting the longer primary legs 9, the insertion of the secondary legs 13 is guided via the already partially inserted primary legs 9. Thus, the connector element 5 may be attached or connected to the decks 2 without any tools, just by placing the connector element 5 on the decks 2 and by inserting and pushing the primary and secondary legs 9, 13 into respective openings 11, 15 provided in the deck.

The two protrusions 14 on the secondary leg 13 and the through hole 10 of the primary leg 9 on one side of the connector element 5 form a triangle which extends both in the vertical and in the lateral direction, i.e. in a plane inclined with respect to the base portion 6 and, resp., the deck 2. This results in a particularly stable connection of the respective connector element 5 to the decks 2 and enables the connector element 5 to absorb forces applied thereto in any direction. Therefore, it is unlikely that the connector element 5 is levered out of the decks 2. Additionally, if a load, e.g. a stacking box or a different suitably dimensioned box, is loaded onto the deck 2, the box is seated on the plate-like base portion 6 which lies flat on the deck 2. Any load pressing laterally against the rim portion 7 results in a torque, since the rim portion 7 extends upwards from the base portion 6 and thus acts as a lever. This torque is counteracted by the weight of the load itself since it presses down on the base portion 6. Thus, the risk of levering out the connector element 5 is further minimized.

In order to remove the connector element 5 from the decks 2, the primary and secondary legs 9, 13 can be accessed from the underside of the dolly bodies 1 and/or from above through the demounting holes 18 via a tool such as a slotted screw driver and can then be pushed away from the engagement structures 12, 17 of the dolly bodies 1 in order to disengage the snap-fit couplings. Simultaneously, the respective connector element 5 is pushed or drawn upwards out of the deck 2. For this purpose, a grip hole 19 may be provided on the connector element, e.g. extending centrally through the rim portion 7. Accordingly, the connector elements 5 can be demounted or disengaged and reused. Also, the transport platform may be reused individually or coupled with other transport platforms e.g. arranged in a line or as a matrix of several transport platforms.

Each dolly body 1 and/or the connector element 5 is integrally formed (one piece) and is made of plastic, in particular thermoplastic, e.g. by injection moulding, or may be formed by rapid prototyping or additive manufacturing.

### List of reference numbers

- 1: dolly body / transport platform
- 2: deck
- 3: upper edge
- 4: wheel recess
- 5: connector element
- 6: base portion
- 7: rim portion
- 8: adapter element
- 9: primary leg
- 10: through hole, engagement portion of the primary leg
- 11: primary opening
- 12: nose, engagement portion of the dolly body
- 13: secondary leg
- 14: protrusion, engagement portion of the secondary leg
- 15: secondary opening
- 16: longitudinal opening
- 17: edge, engagement portion of the dolly body
- 18: demounting hole
- 19: grip hole

## Claims

1. A transport system having
at least two transport platforms (1), each of which has a deck (2) and at least one opening (11, 15); and
a connector element (5) being connected or connectable to the decks (2) of the at least two laterally arranged transport platforms (1) in order to provide a connection of the at least two transport platforms (1), the connector element (5) comprising
a plate shaped base portion (6) which is adapted to lie flush against the decks (2) when the connector element (5) is connected to the decks (2),
a rim portion (7) protruding from one side of the plate-shaped base portion (6) in order to protrude from the decks (2) of the transport platforms (1) for restraining loads placed on top of the decks (2) at least in a lateral direction when the connector element (5) is connected to the decks (2), and
at least two legs (9, 13) protruding from another side of the plate-shaped base portion in order to be inserted into the respective corresponding openings (11, 15) in the decks (2) of each of the at least two transport platforms (1) when the connector element (5) is connected to the decks (2),
**characterized in that**
the at least two legs (9, 13) each comprise an engagement portion (10, 14) adapted for being received and snap-fitted into the openings (11, 15) when the connector element (5) is connected to the decks (2); and
the at least two legs (9, 13) comprise at least one primary leg (9) and/or at least one secondary leg (13) provided at each side of the rim portion (7) and being arranged symmetrically with respect to a vertical symmetry plane comprising the rim portion (7) which is located in and extends along said symmetry plane.

2. The transport system according to claim 1, wherein the rim portion (7) is arranged at a centre of the connector element (5) so as to coincide with an upper edge (3) of the deck (2) when the connector element (5) is connected thereto.

3. The transport system according to any one of the preceding claims,
wherein two primary legs (9) and two secondary legs (13) are arranged symmetrically to the symmetry plane.

4. The transport system according to claim 3, wherein the two primary legs (9) are arranged at a centre of the connector element (5), preferably directly adjacent to or overlapping the rim portion (7).

5. The transport system according to claim 3 or 4, wherein the two secondary legs (13) have an elongated shape extending parallel to the rim portion (7) which are preferably arranged at opposite sides on an outer periphery of the connector element (5).

6. The transport system according to any one of the preceding claims,
wherein the engagement portion (10) of at least one of the legs (9) is different from the engagement portion (14) of another of the legs (13), the engagement portions (10, 14) preferably being engaged or engageable from opposite directions.

7. The transport system according to any one of the preceding claims,
wherein the legs (9, 13) form at least three engagement portions (10, 14) which are spaced apart from each other both laterally and vertically.

8. The transport system according to any one of the preceding claims,
wherein the rim portion (7) forms a section of a restraining rim or of a stacking rim, preferably a longitudinal side rim section.

9. The transport system according to any one of the preceding claims,
wherein the engagement portions (10, 14) are tabs or protrusions.

10. The transport system according to claim 9, wherein the connector element (5) connects at least two of the transport platforms (1) which are juxtaposed such that they directly contact each other at respective flanks.

11. The transport system according to claim 9 or 10, wherein the opening or openings (15, 11) in the decks (2) are located such that, when the connector element (5) connects the at least two transport platforms (1), the rim portion (7) of the connector element (5) coincides with both of the upper edges (3) of the decks (2).

12. The transport system according to any one of the claims 9 to 11, wherein at least four openings (15, 11) are provided in the rectangular deck (1) of each transport platform (1), at least one per side, such that the transport platforms (1) are connected or connectable to each other at any of their respective sides.

13. The transport system according to any one of the claims 9 to 12, wherein at least one adapter element is provided which is connected or connectable to one of the decks (2) via the opening or openings (11, 15), comprising an additional rim portion which corresponds to the rim portion (7) of the connector element (5).

## Patentansprüche

1. Transportsystem mit
mindestens zwei Transportplattformen (1), von denen jede ein Deck (2) und mindestens eine Öffnung (11, 15) aufweist; und
ein Verbindungselement (5), das mit den Decks (2) der mindestens zwei seitlich angeordneten Transportplattformen (1) verbunden oder verbindbar ist, um eine Verbindung der mindestens zwei Transportplattformen (1) herzustellen, wobei das Verbindungselement (5) Folgendes umfasst
einen plattenförmigen Basisabschnitt (6), der so angepasst ist, dass er bündig an den Decks (2) anliegt, wenn das Verbindungselement (5) mit den Decks (2) verbunden ist,
einen Randabschnitt (7), der von einer Seite des plattenförmigen Basisabschnitts (6) vorsteht, um von den Decks (2) der Transportplattformen (1) vorzustehen, um Lasten, die auf den Decks (2) platziert sind, zumindest in einer seitlichen Richtung zurückzuhalten, wenn das Verbindungselement (5) mit den Decks (2) verbunden ist, und
mindestens zwei Beine (9, 13), die von einer anderen Seite des plattenförmigen Basisabschnitts vorstehen, um in die jeweiligen entsprechenden Öffnungen (11, 15) in den Decks (2) jeder der mindestens zwei Transportplattformen (1) eingeführt zu werden, wenn das Verbindungselement (5) mit den Decks (2) verbunden ist,
**dadurch gekennzeichnet, dass**
die mindestens zwei Beine (9, 13) jeweils einen Eingriffsabschnitt (10, 14) umfassen, der dazu angepasst ist, in die Öffnungen (11, 15) aufgenommen und eingerastet zu werden, wenn das Verbindungselement (5) mit den Decks (2) verbunden ist; und
die mindestens zwei Beine (9, 13) mindestens ein primäres Bein (9) und/oder mindestens ein sekundäres Bein (13) umfassen, die auf jeder Seite des Randabschnitts (7) vorgesehen sind und symmetrisch in Bezug auf eine vertikale Symmetrieebene angeordnet sind, die den Randabschnitt (7) umfasst, der sich in der Symmetrieebene befindet und entlang dieser erstreckt.

2. Transportsystem nach Anspruch 1, wobei der Randabschnitt (7) in der Mitte des Verbindungselements (5) so angeordnet ist, dass er mit einer oberen Kante (3) des Decks (2) zusammenfällt, wenn das Verbindungselement (5) mit diesem verbunden ist.

3. Transportsystem nach einem der vorhergehenden Ansprüche, wobei zwei primären Beine (9) und zwei sekundären Beine (13) symmetrisch zur Symmetrieebene angeordnet sind.

4. Transportsystem nach Anspruch 3, wobei die beiden primären Beine (9) in der Mitte des Verbindungselements (5) angeordnet sind, vorzugsweise direkt neben oder überlappend mit dem Randabschnitt (7).

5. Transportsystem nach Anspruch 3 oder 4, wobei die beiden sekundären Beine (13) eine längliche, parallel zum Randabschnitt (7) verlaufende Form aufweisen, die vorzugsweise an gegenüberliegenden Seiten an einem Außenumfang des Verbindungselements (5) angeordnet sind.

6. Transportsystem nach einem der vorhergehenden Ansprüche, wobei der Eingriffsabschnitt (10) mindestens eines der Beine (9) sich von dem Eingriffsabschnitt (14) eines anderen der Beine (13) unterscheidet, wobei die Eingriffsabschnitte (10, 14) vorzugsweise aus entgegengesetzten Richtungen in Eingriff stehen oder gebracht werden können.

7. Transportsystem nach einem der vorhergehenden Ansprüche, wobei die Beine (9, 13) mindestens drei Eingriffsabschnitte (10, 14) bilden, die sowohl seitlich als auch vertikal voneinander beabstandet sind.

8. Transportsystem nach einem der vorhergehenden Ansprüche, wobei der Randabschnitt (7) einen Abschnitt einer Rückhaltefelge oder einer Stapelfelge, vorzugsweise einen längsseitigen Randabschnitt, bildet.

9. Transportsystem nach einem der vorhergehenden Ansprüche, wobei die Eingriffsabschnitte (10, 14) Laschen oder Vorsprünge sind.

10. Transportsystem nach Anspruch 9, wobei das Verbindungselement (5) mindestens zwei der Transportplattformen (1) miteinander verbindet, die so nebeneinander angeordnet sind, dass sie sich an den jeweiligen Flanken direkt berühren.

11. Transportsystem nach Anspruch 9 oder 10, wobei die Öffnung oder Öffnungen (15, 11) in den Decks (2) so angeordnet sind, dass, wenn das Verbindungselement (5) die mindestens zwei Transportplattformen (1) verbindet, der Randabschnitt (7) des Verbindungselements (5) mit beiden oberen Kanten (3) der Decks (2) zusammenfällt.

12. Transportsystem nach einem der Ansprüche 9 bis 11, wobei mindestens vier Öffnungen (15, 11) in dem rechteckigen Deck (1) jeder Transportplattform (1) vorgesehen sind, mindestens eine pro Seite, so dass die Transportplattformen (1) an jeder ihrer jeweiligen Seiten miteinander verbunden oder verbindbar sind.

13. Transportsystem nach einem der Ansprüche 9 bis 12, wobei mindestens ein Adapterelement vorgesehen ist, das über die Öffnung oder Öffnungen (11, 15) mit einem der Decks (2) verbunden oder verbindbar ist, mit einem zusätzlichen Randabschnitt, der dem Randabschnitt (7) des Verbindungselements (5) entspricht.

## Revendications

1. Système de transport présentant
au moins deux plates-formes de transport (1), qui comportent chacune un pont (2) et au moins une ouverture (11, 15) ; et
un élément de liaison (5) qui est relié ou peut être relié aux ponts (2) des au moins deux plates-formes de transport (1) agencées latéralement afin de fournir une liaison des au moins deux plates-formes de transport (1), l'élément de liaison (5) comprenant
une partie de base en forme de plaque (6) qui est adaptée pour affleurer les ponts (2) lorsque l'élément de liaison (5) est relié aux ponts (2),
une partie de rebord (7) faisant saillie depuis un côté de la partie de base en forme de plaque (6) afin de faire saillie depuis les ponts (2) des plates-formes de transport (1) pour retenir des charges placées sur la partie supérieure des ponts (2) au moins dans une direction latérale lorsque l'élément de liaison (5) est relié aux ponts (2), et
au moins deux pieds (9, 13) faisant saillie depuis un autre côté de la partie de base en forme de plaque afin d'être insérés dans les ouvertures correspondantes respectives (11, 15) dans les ponts (2) de chacune des au moins deux plates-formes de transport (1) lorsque l'élément de liaison (5) est relié aux ponts (2),
**caractérisé en ce que**
les au moins deux pieds (9, 13) comprennent chacun une partie de mise en prise (10, 14) adaptée pour être reçue et encliquetée dans les ouvertures (11, 15) lorsque l'élément de liaison (5) est relié aux ponts (2) ; et
les au moins deux pieds (9, 13) comprennent au moins un pied primaire (9) et/ou au moins un pied secondaire (13) disposés de chaque côté de la partie de rebord (7) et qui sont agencés symétriquement par rapport à un plan de symétrie vertical comprenant la partie de rebord (7) qui est située dans ledit plan de symétrie et s'étend le long de celui-ci.

2. Système de transport selon la revendication 1, dans lequel la partie de rebord (7) est agencée au centre de l'élément de liaison (5) de manière à coïncider avec un bord supérieur (3) du pont (2) lorsque l'élément de liaison (5) est relié à celui-ci.

3. Système de transport selon l'une quelconque des revendications précédentes, dans lequel deux pieds primaires (9) et deux pieds secondaires (13) sont agencés symétriquement par rapport au plan de symétrie.

4. Système de transport selon la revendication 3, dans lequel les deux pieds principaux (9) sont agencés au centre de l'élément de liaison (5), de préférence directement adjacents à la partie de rebord (7) ou chevauchant celle-ci.

5. Système de transport selon la revendication 3 ou 4, dans lequel les deux pieds secondaires (13) présentent une forme allongée s'étendant parallèlement à la partie de rebord (7) et sont, de préférence, agencés sur des côtés opposés sur une périphérie externe de l'élément de liaison (5).

6. Système de transport selon l'une quelconque des revendications précédentes, dans lequel la partie de mise en prise (10) d'au moins l'un des pieds (9) est différente de la partie de mise en prise (14) d'un autre des pieds (13), les parties de mise en prise (10, 14) étant, de préférence, mises en prises ou pouvant être mises en prise dans des directions opposées.

7. Système de transport selon l'une quelconque des revendications précédentes, dans lequel les pieds (9, 13) forment au moins trois parties de mise en prise (10, 14) qui sont espacées les unes des autres à la fois latéralement et verticalement.

8. Système de transport selon l'une quelconque des revendications précédentes, dans lequel la partie de rebord (7) forme une section d'un rebord de retenue ou d'un rebord d'empilage, de préférence une section de rebord latéral longitudinal.

9. Système de transport selon l'une quelconque des revendications précédentes, dans lequel les parties de mise en prise (10, 14) sont des languettes ou des saillies.

10. Système de transport selon la revendication 9, dans lequel l'élément de liaison (5) relie au moins deux des plates-formes de transport (1) qui sont juxtaposées de telle sorte qu'elles viennent directement en contact les unes avec les autres au niveau de flancs respectifs.

11. Système de transport selon la revendication 9 ou 10, dans lequel l'ouverture ou les ouvertures (15, 11) dans les ponts (2) sont situées de telle sorte que, lorsque l'élément de liaison (5) relie les au moins deux plates-formes de transport (1), la partie de rebord (7) de l'élément de liaison (5) coïncide avec les deux bords supérieurs (3) des ponts (2).

12. Système de transport selon l'une quelconque des revendications 9 à 11, dans lequel au moins quatre ouvertures (15, 11) sont ménagées dans le pont rectangulaire (1) de chaque plate-forme de transport (1), au moins une par côté, de telle sorte que les plates-formes de transport (1) soient reliées ou puissent être reliées les unes aux autres au niveau de l'un quelconque de leurs côtés respectifs.

13. Système de transport selon l'une quelconque des revendications 9 à 12, dans lequel il est prévu au moins un élément d'adaptation qui est relié ou peut être relié à l'un des ponts (2) par le biais de l'ouverture ou des ouvertures (11, 15), comprenant une partie de rebord supplémentaire qui correspond à la partie de rebord (7) de l'élément de liaison (5).
